(19)

Europäisches
Patentamt
European
Patent Office
Office européen
des brevets

(11) **EP 4 231 600 A1**

(12) **EUROPEAN PATENT APPLICATION**

(43) Date of publication:
**23.08.2023 Bulletin 2023/34**

(21) Application number: **23157750.3**

(22) Date of filing: **21.02.2023**

(51) International Patent Classification (IPC):
***H04L 27/26*** (2006.01)　　　***H04L 5/00*** (2006.01)

(52) Cooperative Patent Classification (CPC):
**H04L 27/2603; H04L 5/0046; H04L 5/0053;
H04L 27/26132; H04L 27/2621**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.02.2022　US 202263312117 P
23.03.2022　US 202263322668 P
17.02.2023　US 202318170651**

(71) Applicant: **MediaTek Inc.
Hsinchu City 30078 (TW)**

(72) Inventors:
 • **YANG, Tung-Sheng
　Hsinchu City 30078 (TW)**

 • **HSIEH, Hung-Tao
　Hsinchu City 30078 (TW)**
 • **LU, Yen-Shuo
　Hsinchu City 30078 (TW)**
 • **CHUANG, Wei-Ping
　Hsinchu City 30078 (TW)**
 • **TSENG, Ting-Che
　Hsinchu City 30078 (TW)**
 • **CHIU, Wen-Hsien
　Hsinchu City 30078 (TW)**

(74) Representative: **Hoefer & Partner Patentanwälte
mbB
Pilgersheimer Straße 20
81543 München (DE)**

(54) **DISTRIBUTED TONE MAPPING FOR LONG-RANGE WIRELESS COMMUNICATION SYSTEM**

(57)　　A device (100) is provided, which includes radio-frequency circuitry (116) and an encoder (104). The encoder (104) is configured to modulate input data to generate a long-range packet, and to transmit the long-range packet to a receiver through the radio-frequency circuitry (116). The long-range packet includes a long-range signal field, LR-SIG, and a long-range data field, LR-DATA. Each modulated bit in the long-range signal field and the long-range data field is spread into a plurality of spread modulated bits that are distributed into a plurality of symbols in a frequency domain.

100

FIG. 1

EP 4 231 600 A1

**Description**

**CROSS REFERENCE TO RELATED APPLICATIONS**

This application claims the benefits of U.S. Provisional Application No. 63/312,117 filed on Feb. 21, 2022, and U.S. Provisional Application No. 63/322,668 filed on March 23, 2022, the entirety of which are incorporated by reference herein.

BACKGROUND OF THE DISCLOSURE

**Field of the disclosure**

The present invention relates to wireless communication systems, and, in particular, to a device and a method for distributed tone mapping in a long-range wireless communication system.

**Description of the Related Art**

As technology advances, demand is growing for long-range wireless transmission over Wi-Fi networks. However, the Wi-Fi 6 specification does not define any PPDU (physical layer protocol data unit) format for long-range transmission, and it is difficult for the receiver to perform timing synchronization, frequency offset estimation, and channel estimation on a long-range transmission.

**BRIEF SUMMARY OF THE DISCLOSURE**

Accordingly, there is demand for a device and a method for distributed tone mapping in a long-range wireless communication system to solve the aforementioned problem. A device and a method according to the invention are defined in the independent claims. The dependent claims define preferred embodiments thereof.

An embodiment of the present invention provides a device, which includes radio-frequency circuitry and an encoder. The encoder is configured to modulate input data to generate a long-range packet, and to transmit the long-range packet to a receiver through the radio-frequency circuitry. The long-range packet includes a long-range signal field (LR-SIG) and a long-range data field (LR-DATA). Each modulated bits in the long-range signal field and the long-range data field is spread into a plurality of spread modulated bits that are distributed into a plurality of symbols in a frequency domain.

Another embodiment of the present invention provides a method. The method includes the following steps: utilizing an encoder of a transmitter to modulate input data to generate a long-range packet; and utilizing radio-frequency circuitry of the transmitter to transmit the long-range packet to a receiver. The long-range packet comprises a long-range signal field (LR-SIG) and a long-range data field (LR-DATA). Each modulated bits in the long-range signal field and the long-range data field is spread into a plurality of spread modulated bits that are distributed into a plurality of symbols in a frequency domain.

**BRIEF DESCRIPTION OF THE DRAWINGS**

The present invention can be more fully understood by reading the subsequent detailed description and examples with references made to the accompanying drawings, wherein:

FIG. 1 is a block diagram of an encoding architecture of a transmitter in accordance with an embodiment of the disclosure;
FIG. 2 is a diagram of the long-range packet in accordance with an embodiment of the disclosure;
FIGs. 3A-3D are diagrams of different distributions of symbols for the LR-STF and LR-LTF1 fields in in accordance with an embodiment of the disclosure;
FIG. 4 is a diagram of the LR-LTF2 field in the long-range packet in accordance with an embodiment of the disclosure;
FIG. 5 is a diagram of distributed tone mapping in the frequency domain in accordance with yet another embodiment of the disclosure;
FIG. 6 is a flow chart of a method for distributed tone mapping in a long-range wireless communication system in accordance with an embodiment of the disclosure; and
FIG. 7 is a diagram showing the matrix corresponding to the spreading index and spreading factor in accordance with an embodiment of the disclosure.

**DETAILED DESCRIPTION OF THE DISCLOSURE**

The following description is made for the purpose of illustrating the general principles of the disclosure and should not be taken in a limiting sense. The scope of the disclosure is best determined by reference to the appended claims.

The following description is presented to enable one of ordinary skill in the art to make and use the invention, and is provided in the context of a patent application and its requirements. Various modifications to the embodiments and the generic principles and features described herein will be readily apparent to those skilled in the art. Thus, the present invention is not intended to be limited to the embodiments shown, but is to be accorded the widest scope consistent with the principles and features described herein.

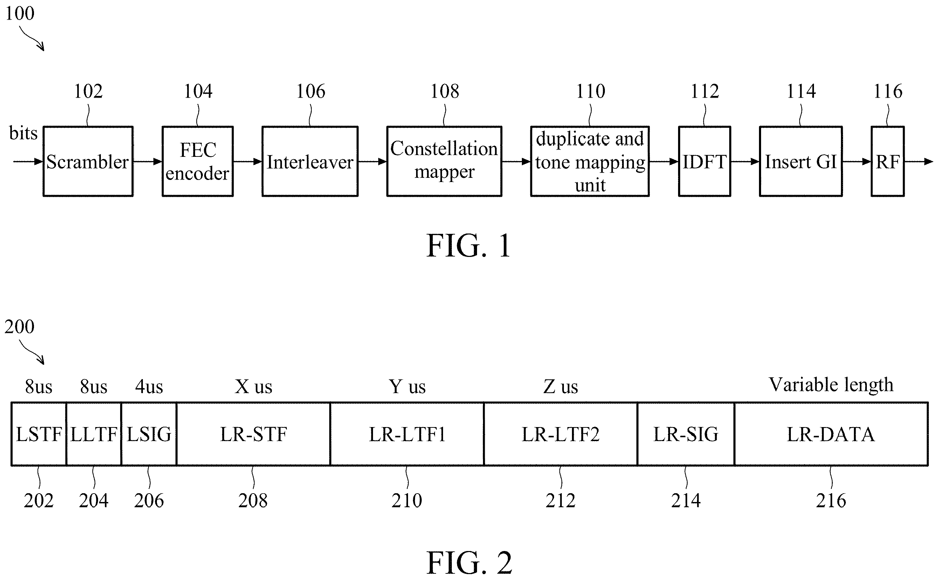

FIG. 1 is a block diagram of an encoding architecture of a transmitter in accordance with an embodiment of the disclosure.

Preferably, the transmitter 100 may be used in a wireless communication device in a long-range Wi-Fi system. As depicted in FIG. 1, the encoding architecture of the transmitter 100 may include a scrambler 102, a forward error correction (FEC) encoder 104, an interleaver 106, a constellation mapper 108, a duplicate and tone mapping unit 110 an inverse discrete Fourier transform (IDFT) unit 112, guard interval inserter 114, and a radio frequency (RF) device 116. Preferably, these components 102-114 in the encoding architecture may be implemented using dedicated hardware circuitry, such as an application-specific integrated circuit (ASIC), a field-programmable gate array (FPGA), a system-on-chip (SoC), or other functionally equivalent circuits, but the disclosure is not limited thereto. Alternatively or additionally preferably, the components 102-114 may be implemented using software that is executed by a central processing unit (CPU), a digital signal processor (DSP), or a microcontroller, but the disclosure is not limited thereto. The radio frequency device 116 may be implemented using radio-frequency circuitry, such as one or more antennas.

The scrambler 102 may be used to receive user data, and generate scrambled in response to the input data (e.g., digital data). For example, the scrambler 102 may generate the symbol density of the received input data, where the number of 0s and the number of 1s are substantially the same. The FEC encoder 104 may use a BCC (binary convolutional code) or LDPC (low-density parity check) algorithm with a code rate of 1/2 or 1/4 to encode the scrambled data. The interleaver 106 may be used to interleave the encoded data to make sure that adjacent symbols in the coded sequence are space out in the transmitted sequence, so that any clumps of bit errors in the received sequence are spread out more uniformly by the de-interleaver of the decoder (not shown in FIG. 1).

The constellation mapper 108 may be used to map the interleaved encoded data using a phase shift keying technique such as binary phase shift keying (BPSK) or quadrature binary phase shift keying (QBPSK) to generate a mapped sequence. The duplicate and tone mapping unit 110 may be used to duplicate the mapped sequence with different multiples (e.g., 2x, 4x, or 8x) in the frequency domain depending on which field (e.g., long-range signal field (LR-SIG), long-range data field (LR-DATA), etc.) of the long-range packet is currently processed, where the details will be described later. That is, the duplicate and tone mapping unit 110 may duplicate the mapped sequence to spread the modulated bit in the LR-SIG and the LR-DATA into a plurality of spread modulated bits. In addition, the duplicate and tone mapping unit 110 may apply phase rotation to the spread modulated bits per bit or duplicated tones to reduce the PAPR of the transmitter 100. The IDFT (inverse discrete Fourier transform) unit 112 may be used to transform the frequency-domain data at the output of the duplicate and tone mapping unit 110 into time-domain data. The guard-interval inserter 114 may be used to add a guard interval between two adjacent fields (e.g., LR-LTF1 and LR-LTF2, and so on) of the output long-range packet.

FIG. 2 is a diagram of the long-range packet in accordance with an embodiment of the disclosure. Please refer to FIG. 1 and FIG. 2.

The long-range packet 200 may be a PPDU (physical layer protocol data unit), which includes a plurality of fields 202 to 216. The fields 202 to 216 respectively denote LSTF (legacy short training field), LLTF (legacy long training field), LSIG (legacy signal), LR-STF (long-range short training field), LR-LTF1 (long-range long training field 1), LR-LTF2 (long-range long training field 2), LR-SIG (long-range signal), and LR-DATA (long-range data). The fields 202 to 206 may be compatible with the IEEE 802.11g LG-OFDM preamble format for spoofing, where each of the fields 202, 204, and 206 may have lengths of 8μs, 8μs, and 4μs in the time domain, respectively.

The fields 208 to 216 are dedicated for long-range Wi-Fi communication. For example, the fields 208 to 212 may have lengths of X μs, Y μs, and Z μs in the time domain, respectively. The value of X, Y, and Z may be changed depending on how many times the symbols in the corresponding field is repeated. The field 208 is designed for the decoder to have a better packet detection performance, and it can also be used for packet format detection. The field 210 is designed for the decoder to have better performances on timing synchronization and frequency offset estimation. The field 212 is designed for the decoder to perform long-range channel estimation.

The field 214 is a long-range version of the signal field, and it is used to provide demodulation or decoding parameters (e.g., FEC code rate or duplication factor) for the data field (e.g., field 216). The field 216 refers to the long-range data field.

Preferably, for the field 214 (LR-SIG), the FEC encoder 104 may use BCC or LDPC with a code rate of 1/2 or 1/4, and the duplicate and tone mapping unit 110 may perform 8x duplicate (e.g., hash spreading) of the mapped sequence for tone mapping within one 20MHz channel. In addition, for the field 216 (LR-DATA), the FEC encoder 104 may use BCC or LDPC with a code rate of 1/2 or 1/4, and the duplicate and tone mapping unit 110 may perform 2x, 4x, or 8x duplicate for tone mapping within one 20MHz channel. The decoding parameters for the field 216 are indicated in the field 214 (LR-SIG).

In addition, a hash spreading mechanism using frequency repetition can not only effectively overcome the issue of fading channels, but also provide robust security. However, highly-correlated frequency repetition results using a fixed spreading index may result in a high PAPR (peak-to-average power ratio) for the transmitter 100. Thus, the duplicate and tone mapping unit 110 may use a dynamic spreading parameter for the hash spreading mechanism to solve the problem of the high PAPR.

For example, a cyclic shift spreading index j is used by the duplicate and tone mapping unit 110, where the cyclic shift spreading index j can be expressed by equation (1) as follows:

$$j = \left(j_{off} + \text{bit\_cnt} \% L\right)\%L \qquad (1)$$

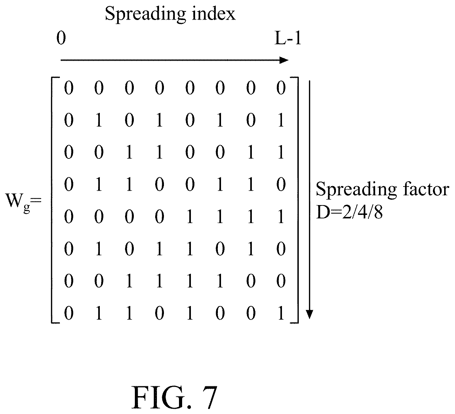

where $j_{off}$ denotes a preset offset within a range of [0, L-1]; bit_cnt denotes a bit count; % represents a modulo operation. In addition, the relationship between the spreading index and spreading factor D (e.g., can be 2, 4, or 8) can be expressed by the matrix $W_s$ shown in FIG. 7.

Specifically, there may be 52 tones within a 20MHz channel, where 48 tones are for data, and 4 tones are for pilot. In addition, the duplicated tone can be separately distributed. Table 1 shows an example of the duplicated tone index for the 2x, 4x, and 8x duplicated data and their pilot indices:

Table 1

| | Duplicated tone indices | Pilot index |
|---|---|---|
| 2x duplicated data | [-26,1], [-25, 2], [-24, 3], [-22, 5], [-20, 6], [-19,8], [-18, 9], [-17, 10], [-16, 11], [-15, 12], [-14, 13], [-13, 14], [-12, 15], [-11, 16], [-10, 17], [-9, 18], [-8, 19], [-6, 20], [-5, 22], [-4, 23], [-3, 24], [-2, 25], [-1, 26] | [-21, -7, 7, 21] |
| 4x duplicated data | [-26,-13,1,14],[-25,-12,2,15],[-24,-11,3,16], [-23,-10,4,17],[-22,-9,5,18],[-20,-8,6,19], [-19,-6,8,20],[-18,-5,9,22],[-17,-4,10,23], [-16,-3,11,24],[-15,-2,12,25],[-14,-1,13,26] | [-21, -7, 7, 21] |
| 8x duplicated data | [-26, -19, -13, -6, 1, 8, 14, 20], [-25, -18, -12, -5, 2, 9, 15, 22], [-24, -17, -11, -4, 3, 10, 16, 23], [-23, -16, -10, -3, 4, 11, 17, 24], [-22, -15, -9, -2, 5, 12, 18, 25], [-20, -14, -8, -1,6, 13, 19, 26] | [-21, -7, 7, 21] |

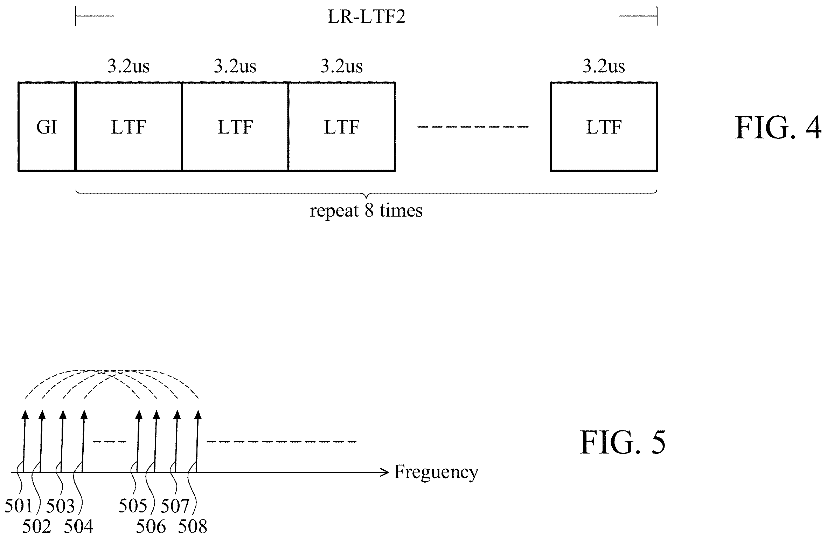

More specifically, the groups of duplicated tone indices for the 2x, 4x, or 8x duplicated data may be distributed over the frequency domain in a designated order, where two neighbor indices in each group are not consecutive in number. Taking the 8x duplicated data as an example, there are six groups of duplicated tone indices. The first group of duplicated tone indices is [-26, -19, -13, -6, 1, 8, 14, 20], and the second group of duplicated tone indices is [-25, -18, -12, -5, 2, 9, 15, 22], and so on. In this embodiment, the frequency-domain data output by the duplicate and tone mapping unit 150 may start from the first group to the sixth group in sequence. In other words, the duplicated (or spread) modulated bits are distributed in groups over the frequency domain. For example, as shown in FIG. 5, tones (i.e., pulses) 501-502, 503-504, 505-506, and 507-508 may be consecutive tones in the frequency domain. After the spread modulation (i.e., duplicate 2x, 4x, or 8x), the pulses 501 and 505 may be classified into the same group, and the pulses 502 and 506 may be classified into another group, and so on. Therefore, with the feature of distributed modulated bits in the long-range packet 200, the sensitivity performance of the decoder (or the receiver) can be improved.

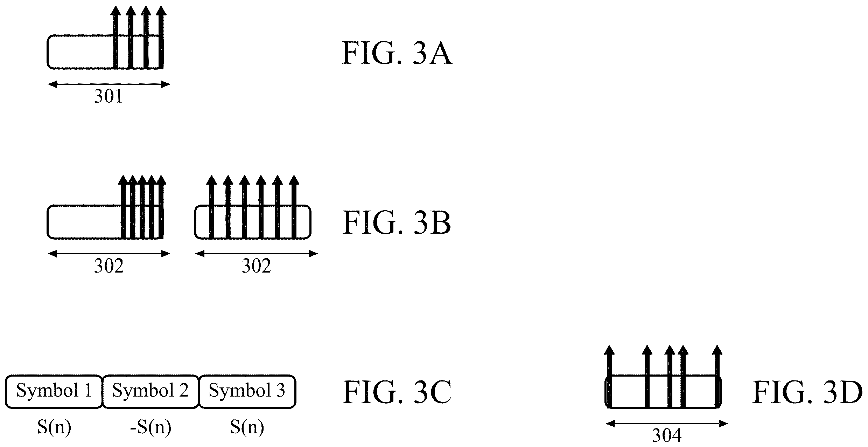

FIGs. 3A-3D are diagrams of different distributions of symbols for the LR-STF and LR-LTF1 fields in accordance with an embodiment of the disclosure. Please refer to FIG. 2 and FIGs. 3A-3D.

Referring to FIG. 3A, the LR-STF and LR-LTF1 fields (i.e., fields 208 and 210) may occupy part of frequency tones within the frequency band 301. For example, the frequency tones corresponding to the LR-STF and LR-LTF1 fields may be located at higher frequencies in the frequency band 301. Alternatively, in another embodiment, the frequency tones corresponding to the LR-STF and LR-LTF1 fields may also be located at lower frequencies within the frequency band 301.

Referring to FIG. 3B, the frequency spacing corresponding to the LR-STF and LR-LTF1 fields (i.e., fields 208 and 210) may be different from the frequency spacing corresponding to the LLTF (legacy LTF) field. For example, as shown in the left portion of FIG. 3B, the frequency tones corresponding to the LR-STF and LR-LTF1 fields may be located at higher frequencies in the frequency band 302 and corresponded to equal frequency spacing within the frequency band 302, where the frequency spacing shown in the left portion of FIG. 3B is tighter than that shown in FIG. 3A. Alternatively, as shown in the right portion of FIG. 3B, the frequency tones in the LR-STF and LR-LTF1 fields may be located at all frequencies in the frequency band 302 and corresponded to equal frequency spacing within the frequency band 302,.

Referring to FIG. 3C, the sign number (i.e., polarity) of the symbols (e.g., OFDM symbols) in the LR-STF and LR-LTF1 fields (i.e., fields 208 and 210) changes to a complementary sign every symbol. In other words, the phase of the symbol is rotated by 180 degrees, and thus the signs two adjacent symbols in the LT-STF and LR-LTF1 fields may change from a positive sign to a negative sign, or change from a negative sign to a positive sign. Referring to FIG. 3C, symbol 1 in the LR-LTF1 field (or the LR-STF field) denotes S(n) having a positive sign, and symbol 2 in the LR-LTF1 field (or the LR-STF field) denotes S(n) having a negative sign, and symbol 3 in the LR-LTF1 field (or the LR-STF field) denotes S(n) having a positive sign, and so on. Accordingly, by applying phase rotation to each symbol, the synchronization of the transmitter 100 and its corresponding receiver can be achieved.

Referring to FIG. 3D, the frequency tones corresponding to the LR-STF and LR-LTF1 fields (i.e., fields 208 and 210) may have unequal frequency spacing within the frequency band 304. It should be noted that the transmitter 100 and its corresponding receiver (or decoder) may select one of the frequency spacing methods described in the FIGs. 3A, 3B and 3D for use with the frequency spacing method described in the FIG. 3C in the LR-STF field and LR-LTF1 field, where the selected spacing method for the LR-STF field can be different from that for the LR-LTF1 field.

FIG. 4 is a diagram of the LR-LTF2 field in the long-range packet in accordance with an embodiment of the disclosure. Please refer to FIG. 2 and FIG. 4.

Preferably, the field 212 (i.e., LR-LTF2) is a repeated format of a known sequence of ODFM symbols, and the receiver corresponding to the transmitter 100 can improve the performance of channel estimation by combining these repeated symbols. For example, as shown in FIG. 4, the symbol of the LR-LTF2 field can be repeated 8 times following the guard interval (GI), where each symbol of the LR-LTF2 field may have a length of $3.2\mu s$. It should be noted that the number of repetitions of the LR-LTF2 field is not limited to 8 in the disclosure, and one having ordinary skill in the art can change the number of repetitions of the LR-LTF2 field according to practical needs.

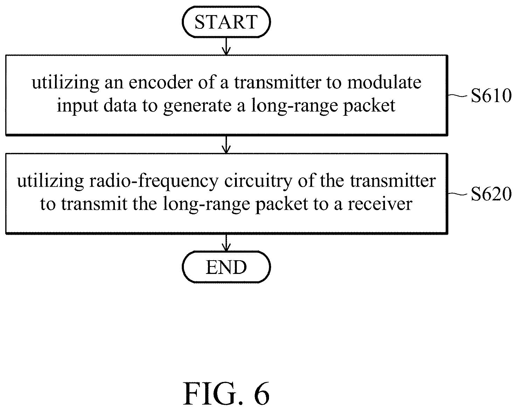

FIG. 6 is a flow chart of a method for distributed tone mapping in a long-range wireless communication system in accordance with an embodiment of the disclosure. Please refer to FIG. 1 and FIG. 6.

Step S610: utilizing an encoder of a transmitter to modulate input data to generate a long-range packet. For example, the encoder may be referred to the encoding architecture of the transmitter 100 shown in FIG. 1. The long-range packet include various field dedicated for long-range transmission, such as a long-range short training field (LR-STF), a first long-range long training field (LR-LTF1), a second long-range long training field (LR-LTF2), the long-range signal field (LR-SIG), and the long-range data field (LR-DATA). For example, the long-range short training field (LR-STF) is for packet format detection, and the first long-range long training field (LR-LTF1) is for timing synchronization and frequency offset estimation performed by the receiver, and the second long-range long training field (LR-LTF2) is for long-range channel estimation performed by the receiver.

Step S620: utilizing radio-frequency circuitry of the transmitter to transmit the long-range packet to a receiver. For example, the long-range packet comprises a long-range signal field (LR-SIG) and a long-range data field (LR-DATA), and each modulated bit in the long-range signal field and the long-range data field is spread into a plurality of spread modulated bits that are distributed into a plurality of symbols in a frequency domain.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

The steps described herein may be implemented using any suitable controller or processor, and software application, which may be stored on any suitable storage location or computer-readable medium. The software application provides instructions that enable the processor to cause the receiver to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any device that can contain, store, communicate, propagate, or transport the program for use by or in connection with the instruction execution system, device, or device.

The medium may be an electronic, magnetic, optical, electromagnetic, infrared, semiconductor system (or device or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk-read/write (CD-R/W).

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1. A device (100), comprising:

   radio-frequency circuitry (116); and
   an encoder (104), configured to modulate input data to generate a long-range packet, and to transmit the long-range packet to a receiver through the radio-frequency circuitry (116),
   wherein the long-range packet comprises a long-range signal field, in the following also referred to as LR-SIG, and a long-range data field, in the following also referred to as LR-DATA, and each modulated bit in the long-range signal field and the long-range data field is spread into a plurality of spread modulated bits that are distributed into a plurality of symbols in a frequency domain.

2. The device (100) as claimed in claim 1, wherein the encoder (104) modulates the input data using a binary convolutional code, in the following also referred to as BCC, or a low-density parity check, in the following also referred to as LDPC, algorithm with a code rate of 1/2 or 1/4.

3. The device (100) as claimed in claim 1 or 2, wherein the long-range packet comprises a legacy short training field, in the following also referred to as LSTF, a legacy long training field, in the following also referred to as LLTF, a legacy signal field, in the following also referred to as LSIG, a long-range short training field, in the following also referred to as LR-STF, a first long-range long training field, in the following also referred to as LR-LTF1, a second long-range long training field, in the following also referred to as LR-LTF2, the LR-SIG, and the LR-DATA that are arranged consecutively in a time domain.

4. The device (100) as claimed in claim 3, wherein the LR-STF is for packet format detection, and the LR-LTF1 is for timing synchronization and frequency offset estimation performed by the receiver, and the LR-LTF2 is for long-range channel estimation performed by the receiver.

5. The device (100) as claimed in claim 3 or 4, wherein the LR-SIG carries demodulation parameters and decoding parameters for the LR-DATA for use by the receiver.

6. The device (100) as claimed in any one of claims 3 to 5, wherein the LR-LTF2 comprises a plurality of repeated OFDM symbols for long-range channel estimation performed by the receiver.

7. The device (100) as claimed in any one of claims 1 to 6, further comprising:
   a duplicate and tone mapping unit, configured to apply phase rotation to the spread modulated bits per bit.

8. The device (100) as claimed in any one of claims 1 to 7, wherein the LR-SIG is modulated using a combination of quadrature binary phase-shift keying, in the following also referred to as QBPSK, and binary phase-shift keying, in the following also referred to as BPSK, for the receiver to detect different packet formats.

9. The device (100) as claimed in any one of claims 3 to 6, and claim 7 or 8 in combination with any one of claims 3 to 6, wherein polarity is inverted for every symbol of the LR-LTF1.

10. The device (100) as claimed in any one of claims 3 to 6 and 9, and claim 7 or 8 in combination with any one of claims 3 to 6, wherein the LR-STF or the LR-LTF1 have unequal frequency spacing within a frequency band corresponding to the LR-STF or the LR-LTF1.

11. A method, comprising:

    utilizing an encoder of a transmitter to modulate input data to generate a long-range packet (S610); and
    utilizing radio-frequency circuitry of the transmitter to transmit the long-range packet to a receiver (S620),
    wherein the long-range packet comprises a long-range signal field, in the following also referred to as LR-SIG, and a long-range data field, in the following also referred to as LR-DATA, and each modulated bit in the long-range signal field and the long-range data field is spread into a plurality of spread modulated bits that are distributed into a plurality of symbols in a frequency domain.

12. The method as claimed in claim 11, further comprising:
utilizing the encoder to modulate the input data using a binary convolutional code, in the following also referred to as BCC, or a low-density parity check, in the following also referred to as LDPC, algorithm with a code rate of 1/2 or 1/4.

13. The method as claimed in claim 11 or 12, wherein the long-range packet comprises a legacy short training field, in the following also referred to as LSTF, a legacy long training field, in the following also referred to as LLTF, a legacy signal field, in the following also referred to as LSIG, a long-range short training field, in the following also referred to as LR-STF, a first long-range long training field, in the following also referred to as LR-LTF1, a second long-range long training field, in the following also referred to as LR-LTF2, the LR-SIG, and the LR-DATA that are arranged consecutively in a time domain.

14. The method as claimed in any one of claims 11 to 13, further comprising: utilizing a duplicate and tone mapping unit of the transmitter to apply phase rotation to the spread modulated bits per bit.

15. The method as claimed in any one of claims 11 to 14, wherein the LR-SIG is modulated using a combination of quadrature binary phase-shift keying, in the following also referred to as QBPSK, and binary phase-shift keying, in the following also referred to as BPSK, for the receiver to detect different packet formats.

EP 4 231 600 A1

100

| bits → | Scrambler | → | FEC encoder | → | Interleaver | → | Constellation mapper | → | duplicate and tone mapping unit | → | IDFT | → | Insert GI | → | RF | → |
|---|---|---|---|---|---|---|---|---|---|---|---|---|---|---|---|

102    104    106    108    110    112    114    116

## FIG. 1

200

| 8us | 8us | 4us | X us | Y us | Z us | | Variable length |
|---|---|---|---|---|---|---|---|
| LSTF | LLTF | LSIG | LR-STF | LR-LTF1 | LR-LTF2 | LR-SIG | LR-DATA |

202    204    206    208    210    212    214    216

## FIG. 2

FIG. 3A

301

FIG. 3B

302            302

| Symbol 1 | Symbol 2 | Symbol 3 |
|----------|----------|----------|
| S(n) | -S(n) | S(n) |

FIG. 3C

FIG. 3D

304

EP 4 231 600 A1

FIG. 4

FIG. 5

START

utilizing an encoder of a transmitter to modulate input data to generate a long-range packet ~S610

utilizing radio-frequency circuitry of the transmitter to transmit the long-range packet to a receiver ~S620

END

FIG. 6

Spreading index

0                                    L-1

$$W_g = \begin{bmatrix} 0 & 0 & 0 & 0 & 0 & 0 & 0 & 0 \\ 0 & 1 & 0 & 1 & 0 & 1 & 0 & 1 \\ 0 & 0 & 1 & 1 & 0 & 0 & 1 & 1 \\ 0 & 1 & 1 & 0 & 0 & 1 & 1 & 0 \\ 0 & 0 & 0 & 0 & 1 & 1 & 1 & 1 \\ 0 & 1 & 0 & 1 & 1 & 0 & 1 & 0 \\ 0 & 0 & 1 & 1 & 1 & 1 & 0 & 0 \\ 0 & 1 & 1 & 0 & 1 & 0 & 0 & 1 \end{bmatrix}$$

Spreading factor
D=2/4/8

FIG. 7

Europäisches
Patentamt

European
Patent Office

Office européen
des brevets

**EUROPEAN SEARCH REPORT**

Application Number

EP 23 15 7750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/174351 A1 (CHUANG WEI-PING [TW] ET AL) 6 June 2019 (2019-06-06) * paragraphs [0027], [0044] – [0046] * * figures 2A, 3, 4 * ----- | 1-15 | INV. H04L27/26 H04L5/00 |
| X | US 2021/385688 A1 (LIU JIANHAN [US] ET AL) 9 December 2021 (2021-12-09) * paragraphs [0030], [0031] * * figures 2-4 * ----- | 1-15 | |

TECHNICAL FIELDS
SEARCHED     (IPC)

H04L

The present search report has been drawn up for all claims

| Place of search | Date of completion of the search | Examiner |
|---|---|---|
| Berlin | 27 June 2023 | Feng, Mei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 231 600 A1**

## ANNEX TO THE EUROPEAN SEARCH REPORT
## ON EUROPEAN PATENT APPLICATION NO.

EP 23 15 7750

27-06-2023

| Patent document cited in search report | | Publication date | Patent family member(s) | | Publication date |
|---|---|---|---|---|---|
| US 2019174351 | A1 | 06-06-2019 | CN | 111262673 A | 09-06-2020 |
| | | | TW | 202023311 A | 16-06-2020 |
| | | | US | 2019174351 A1 | 06-06-2019 |
| US 2021385688 | A1 | 09-12-2021 | CN | 113839759 A | 24-12-2021 |
| | | | EP | 3923530 A1 | 15-12-2021 |
| | | | TW | 202147880 A | 16-12-2021 |
| | | | US | 2021385688 A1 | 09-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63312117
- US 63322668